# EUROPÄISCHE PATENTSCHRIFT

(11) **EP 0 281 988 B1**
(45) Veröffentlichungstag und Bekanntmachung des Hinweises auf die Patenterteilung: **08.09.1993**
(21) Anmeldenummer: 88103516.6
(22) Anmeldetag: 07.03.1988
(51) Int. Cl.: B23Q 3/155

(54) **Flexibles Fertigungssystem für spanabhebende Werkstückbearbeitung**
Flexible manufacturing system for metal cutting
Système de fabrication flexible pour l'usinage de métaux par enlèvement de copeaux

(30) Priorität: 25.04.1987 DE 3713868; 11.03.1987 DE 3707690; 18.04.1987 DE 3713189; 12.12.1987 DE 3742187
(43) Veröffentlichungstag der Anmeldung: 14.09.1988
(73) Patentinhaber: DÖRRIES SCHARMANN GmbH, D-41236 Mönchengladbach (DE)
(72) Erfinder: Esser, Karl-Josef, Dipl.-Ing., D-4050 Mönchengladbach 5 (DE); Berner, Eckhard, D-4050 Mönchengladbach 2 (DE)
(74) Vertreter: Rehders, Jochen, Dipl.-Ing.

(56) Entgegenhaltungen:
- EP-A- 0 038 157
- EP-A- 0 154 349
- EP-A- 0 204 151
- DE-A- 3 440 604
- PATENT ABSTRACTS OF JAPAN, Band 8, Nr. 276 (M-346)[1713], 18. December 1984; & JP-A-59 146 727 (MURATA), 22-08-1984
- PATENT ABSTRACTS OF JAPAN, Band 9, Nr. 18 (M-353)[1741], 25. Januar 1985; JP-A-59 166 437 (TOYODA), 19-09-1984

## Beschreibung

Die Erfindung betrifft ein flexibles Fertigungssystem nach dem Oberbegriff des Hauptanspruches.

Durch die DE-A-32 43 335 und die EP-A-0 110 815 ist eine flexible Fertigungseinrichtung bekannt, bei der die Transporteinrichtung in Kreuzportalbauweise ausgebildet ist, die Werkzeuge zwischen einer Werkzeugablage und den Werkzeugmaschinen einzeln mit Hilfe einer vertikal und horizontal arbeitenden Greifereinrichtung transportierbar sind. - Es ist ferner ein flexibles Fertigungssystem bekannt, das ein Hochregal und vier horizontale Werkzeugmaschinen umfaßt, die durch ein Regalbediengerät miteinander verbunden sind. Hierbei finden zwei Werkzeugtransportgeräte zum Handhaben der Werkzeuge im Zentralspeicherbereich und vier Werkzeugtauschgeräte zum Werkzeugtausch in den sich bei der Bearbeitung mit bewegenden, maschineneigenen Werkzeugmagazinen Anwendung (Kolloquium 1980 des Sonderforschungsbereichs 155 "Flexible Fertigungssysteme", 9.6.1980 der Universität Stuttgart).

Durch das DE-GM 85 20 123 ist ein Gestellmagazin zum Speichern der Werkzeuge einer Werkzeugmaschine, die mit einer Einrichtung zum Wechseln der Werkzeuge ausgerüstet ist, bekannt. Hierbei lagern die Werkzeuge in Reihen horizontal übereinander, wobei mehrere Regale zwischen sich eine Gasse zum Transport der Werkzeuge freilassen. - Ferner bekannt sind beidendig mit Greifern versehene Wechselarme aus der DE-A-1 261 373 und der US-A-3 348 298. Hierbei erfolgt ein Wechseln der Werkzeuge aus zwei zueinander parallelen Stellungen, z. B. aus einem Werkzeugmaschinenmagazin in die Spindel der Werkzeugmaschine. - Durch die DE-A-26 13 736 wie auch die US-A-3 448 656 und die FR-A-1 434 203 sind Werkzeugmaschinen bekannt, bei denen ein Winkelfräskopf um eine gegenüber der Horizontalen geneigten Achse drehbar ist. Hierbei ist die Drehebene rechtwinklig zur geneigten Drehachse des Winkelfräskopfes gelegen und dieser vollführt eine kreisförmige Bewegung um die Drehachse. Hiermit kann die Aufgabe der der Transporteinrichtung nachgeschalteten oder vorgeschalteten Übergabevorrichtung nicht gelöst werden, einen Wechselarm zu schaffen, der in der Lage ist, Werkzeuge in zwei rechtwinklig zueinander gelegenen Ebenen gegeneinander auszutauschen.

Aus "Patent Abstracts of Japan", Band 8, Nr. 276, JP-A-59 146 727 ist ein flexibles Fertigungssystem nach dem Oberbegriff des Patentanspruchs 1 bekannt, bei dem Werkzeugträger mit in mehreren Etagen angeordneten Regalböden in einem Werkzeugvorbereitungsraum mit Werkzeugen bestückt werden. Von dort werden sie mittels einer bodengebundenen Transporteinrichtung in die Nähe von Werkzeugmaschinen gebracht und auf einem Werkzeugträgermagazin abgesetzt. Dieses Werkzeugträgermagazin kann vier Werkzeugträger aufnehmen, ist drehbar und befindet sich im Arbeitsbereich einer Werkzeugübergabevorrichtung, die ein gebrauchtes Werkzeug aus der Werkzeugmaschine entnimmt, durch eine neues Werkzeug ersetzt und das gebrauchte Werkzeug auf den Werkzeugträger zurücksetzt.

Diesen bekannten Fertigungseinrichtungen gegenüber besteht die Aufgabe der Erfindung darin, ein flexibles Fertigungsystem der gattungsmäßigen Art zu schaffen, bei dem die Werkzeuge mit konstruktiv einfachen Mitteln zeit- und raumsparend von dem Regal bwz. den Regalen an die Bearbeitungsmaschinen und umgekehrt gebracht werden können.

Zur Lösung dieser Aufgabe dienen die Merkmale des Hauptanspruches. - Die Merkmale der Unteransprüche dienen der Verbesserung und Weiterentwicklung der Merkmale des Hauptanspruches.

Die erfindungsgemäße Einrichtung zeitigt den Vorteil, daß das Regal oder die Regale eine große Anzahl von Werkzeugen auf engem Raum in Nähe der Werkzeugmaschinen aufnehmen können, daß das Ergreifen und Übergeben der Werkzeuge schnell erfolgen kann und diese auf einem relativ kurzen Weg von Regalen zu den Werkzeugmagazinen und umgekehrt tranportiert werden können. Die Werkzeuge hängen in den Regalböden, die problemlos mit Werkzeugen bestückt, einzeln entnommen werden können. - Die Tranportvorrichtung sowie die Wechselvorrichtung besitzen Elemente, die kurze Hebelarme haben und für kurze Bewegungszeiten der Werkzeuge sorgen.

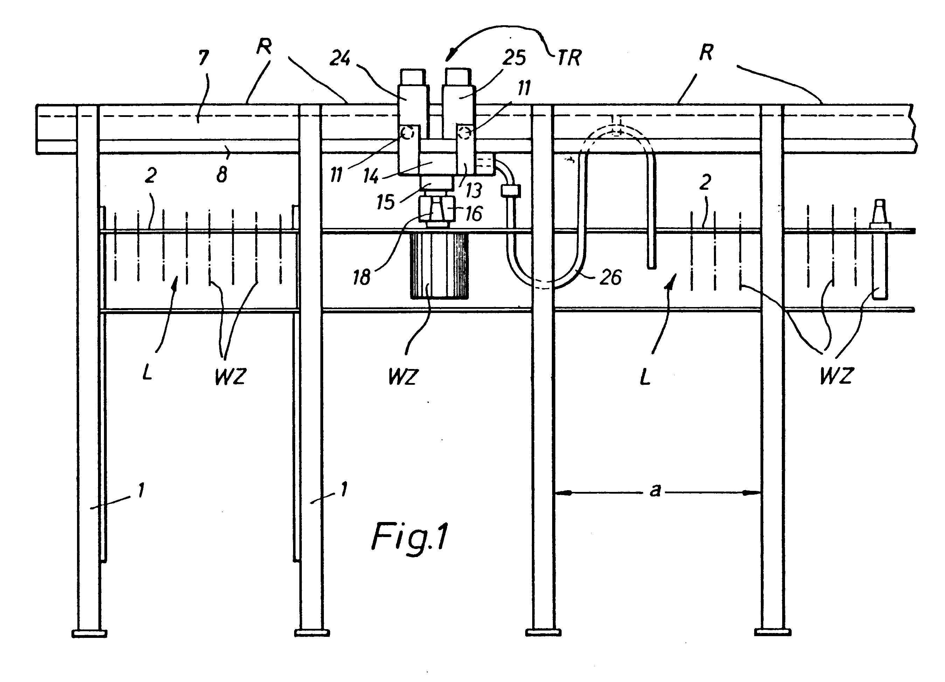

Auf der Zeichnung ist ein Ausführungsbeispiel der erfindungsgemäßen Einrichtung dargestellt und zwar zeigt
- Fig. 1: eine Seitenansicht der Lager- und Transporteinrichtung,
- Fig. 2: einen Vertikalschnitt durch den Lagerteil der Einrichtung mit Blick auf den Transportteil der Einrichtung,
- Fig. 3: eine Draufsicht auf die Lager- und Transporteinrichtung nach der Erfindung,
- Fig. 4 bis 6: die Bewegung eines zweiteiligen Schwenkarmes und den Weg des Werkzeuges aus einem Regal in den Transportweg längs eines Regals oder in die Gasse zwischen zwei sich gegenüberliegenden Regalen,
- Fig. 7: in perspektivischer Ansicht eine Ausbildung einer ersten Wechselvorrichtung zum gleichzeitigen Ergreifen und Wechseln zweier rechtwinklig zueinander angeordneter Werkzeuge mit einem zweiseitigen Wechselarm,
- Fig. 8: eine Einzelheit eines Armendes,
- Fig. 9 bis 12: weitere Darstellungen und Ausführungsbeispiele dieser ersten Wechselvorrichtung,
- Fig. 13 bis 19: die Ausbildung und verschiedene Ansichten der Stellungen einer zweiten Wechselvorrichtung und deren Tragarm sowie der Werkzeuge an diesem Arm und
- Fig. 20: eine Ansicht der Transportvorrichtung und der Wechselvorrichtung an der Übergabestelle.

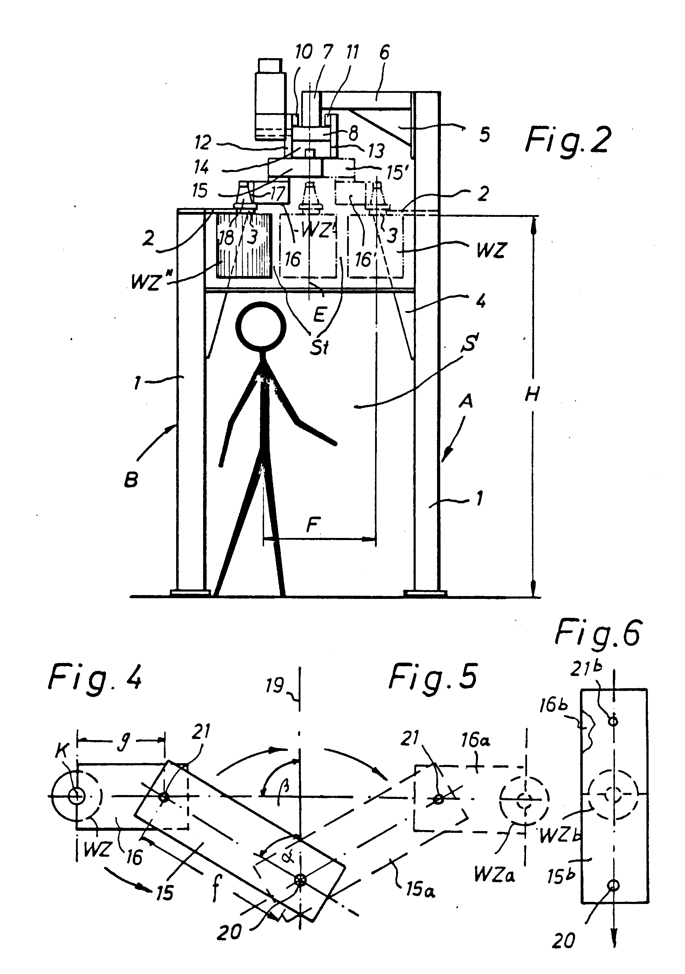

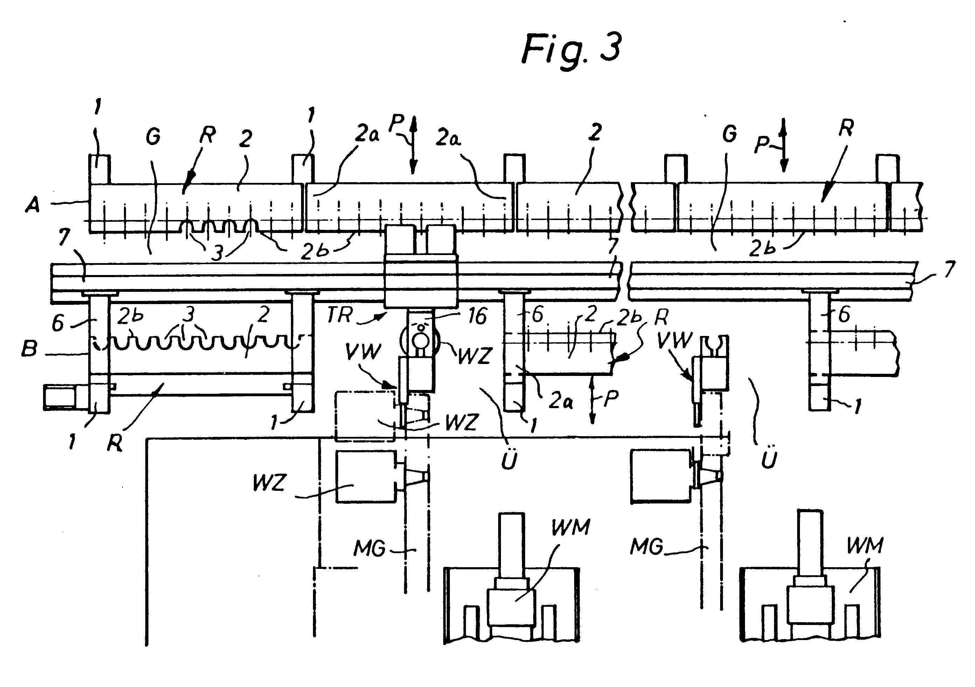

Der Lagerteil L der erfindungsgemäßen Lager- und Transporteinrichtung weist eine Reihe oder vorzugsweise zwei parallele Reihen A, B nebeneinanderstehender und unmittelbar hinter den Werkzeugmaschinen WM vorgesehener Regale R mit Regalsäulen 1 auf, wobei die Maschinen gleichfalls in einer Reihe nebeneinander angeordnet sind (Fig. 3). Die Regale R der Reihen A, B sind gleichartig ausgebildet. Ihre Säulen stehen in einem Abstand a voneinander, der der Länge der Regalböden 2 entspricht. Die Enden 2a dieser Böden sind in nicht dargestellter Weise an den Säulen 1 in einer Höhe H gehalten (Fig. 2), deren Bedeutung nachstehend noch erklärt wird. - Die Regalböden 2 weisen ferner Ausnehmungen 3 an ihrer einen Kante 2b auf, die in einer Reihe nebeneinanderliegend derart vorgesehen sind, daß sie die Werkzeuge in Reihe nebeneinander tragen können. Die Teile 1, 2 bilden jeweils ein Regal R.

Die Säulen 1 weisen eine den Stützen 4 des Regalbodens 2 entsprechende Stütze 5 auf, die einen galgenförmigen Arm 6 abstützt. An diesem ist senkrecht ein Tragteil 7 angeordnet, der eine längsverlaufende Führungsschiene 8 an seinem unteren Ende trägt, so daß die Führungsschiene eine sich parallel zu den Regalböden 2 erstreckende Führungsbahn für die Transportvorrichtung TR bildet. Auf der Oberseite 9 der Schiene 8 rollen an deren Längsrändern zwei Paare von Laufrollen 10, 11 ab, an denen zwei gegenüberliegende, die Schiene 8 beidseitig umschließende Wangen 12, 13 angebracht sind. Diese halten zwischen ihrem unteren Ende ein Vertikallager 14, das an seiner Unterseite einen Armteil 15 schwenkbar trägt. Dieser weist an seinem freien Ende einen weiteren Armteil 16 schwenkbar auf, wobei die beiden Armteile 15, 16 knicksteif miteinander und in horizontalen Ebenen gegeneinander schwenkbar sind. Das freie Ende des Armes 16 weist eine Ausnehmung 17 zur Aufnahme des Konus 18 eines Werkzeuges WZ auf.

Wie Fig. 2 verdeutlicht, können die beiden Arme 15, 16 in eine Lage 15ʹ, 16ʹ verschwenkt werden, so daß ein Werkzeug WZ in einen Boden 2 der Regalreihe A in die Lage WZʹ und umgekehrt ebenso gebracht werden kann wie ein Werkzeug auch aus einer Stellung WZʺ in einem unten noch näher beschriebenen, dem Regalboden der Regalreihe A gegenüberliegenden Regalboden 2 der Regalreihe B (Fig. 3) in die Stellung WZʹ und umgekehrt zu bringen ist.

In Fig. 4 ist die Ausgangsstellung der Arme 15, 16 dargestellt, wobei die Längsmittelachse des Armes 15 einen Winkel α von z. B. 60° mit der Linie 19 einschließt, die den geraden Bewegungsweg des Werkzeugs WZ längs der Regale 2 darstellt. Der Winkel β zwischen der Linie 19 und der Längsmittelachse des Armes 16 schließt einen Winkel von 90° ein, wobei der Abstand f der beiden Schwenkachsen 20, 21 des Armes 15 zu dem Abstand g der gemeinsamen Schwenkachse 21 zu der senkrechten Mittelachse K des Werkzeugs WZ im Verhältnis z. B. 2:1 steht. Die Teile 15, 16 und WZ nehmen die in Fig. 4 bis 6 gezeigten Stellungen 15-15b, 16-16b und WZ-WZb ein, wobei Fig. 4 die erste und Fig. 5 die zweite Schwenkstellung und Fig. 6 die Transportstellung der Teile zwischen den Regalen 2 der Reihen A und B darstellen. Ist nur ein Regal 2 vorgesehen, dann ist die Stellung der Arme 15, 16 und der Weg des Werkzeugs WZ entsprechend.

Die Werkzeuge WZ werden an einem kurzen Hebelarm über einen kurzen Weg bewegt, so daß das Verbringen der Werkzeuge WZ in die Transportebene E zeitsparend und problemlos erfolgen kann. Wesentlich hierbei ist der geradlinige Weg der Werkzeuge aus den Stellungen WZ und WZʺ in die Stellung WZʹ (Fig. 2), der u. a. auch die Form der Ausnehmungen 3 vereinfacht und begünstigt. Trotz des Schwenkens der Arme 15, 16 erfolgt eine Bewegung der Werkzeuge auf im wesentlichen senkrecht zueinander stehenden Koordinaten.

Das Verbringen eines Werkzeugs aus einem Regal 2 in eine Übergabestellung eines Werkzeugs WZ z. B. in einen weiteren Werkzeugaufnahmeteil erfolgt an einer Übergabestelle Ü, an der die zweite Regalreihe B unterbrochen ist (Fig. 3).

Die Öffnungen der Ausnehmungen 3 der Regale 2 der Reihe A und B sind gegeneinander gerichtet. Die im Abstand angeordneten Regalreihen A, B bilden zwischen sich eine Gasse G, in deren Längsmittelebene die Führungsschiene 8, die auch die Transportebene E der Schwenkachse 20 des Armes 15 ist, gelegen ist.

Die Transporteinrichtung kann Werkzeuge wahlweise entweder nur aus dem linken Regal B oder nur aus dem rechten Regal A oder aus beiden Regalreihen A, B entnehmen und sie in der Transportebene E transportieren, je nach dem, welches der vorzugsweise kodierten Werkzeuge WZ z. B. benötigt wird.

An dem Vertikallager 14 sind direkt oder über seitliche Wangen 12 zwei Motoren 24, 25 angeordnet, die von einer flexiblen Leitung 26 gespeist werden. Während der eine Motor die Bewegung der Transporteinrichtung länge der Schiene 8 bewirkt, sorgt der Motor 25 für die Drehbewegung der Arme 15 und 16. Die Leitung 26 umfaßt auch die Steuereinrichtungen zum Ergreifen der Werkzeugkonen 18 bzw. das Lösen der Werkzeuge von dem Ende des Armes 16.

Die Regalböden 2 der Regale R sind in einer Höhe H angeordnet, die das Begehen des Raumes S unterhalb der Werkzeuge WZ an den Regalen 2, 22 bzw. unterhalb des Transportweges in der Ebene E erlaubt.

Wie Fig. 2 erkennen läßt, ist der Abstand F der Ausnehmungen 3 zweier auf gleicher Höhe gegenüberliegender Regals der Regalreihen A, B derart gewählt, daß die Werkzeuge WZ in ihrer Ruhestellung an den Regalen und auf dem Transportweg in der Ebene E nur einen geringen Abstand ST voneinander haben. Der Abstand F der Ausnehmungen 3 entspricht vorzugsweise dem zweifachen Durchmesser der umfanggrößten Werkzeuge zuzüglich des kleinen Abstandes ST.

Vorstehendes läßt erkennen, daß die Lager- und Transporteinrichtung nach der Erfindung lediglich zweier Bewegungen des Werkzeuges WZ bedarf, nämlich eine Bewegung auf der Linie 19 (Fig. 4 bis 6) in eine Stellung in der Transportebene E (Fig. 4 bis 6) und der Transportbewegung in dieser Ebene selbst. Gleiches gilt vom umgekehrten Vorgang des Einordnens eines von der Übergabestation Ü herangeführten Werkzeugs in eines der Regale.

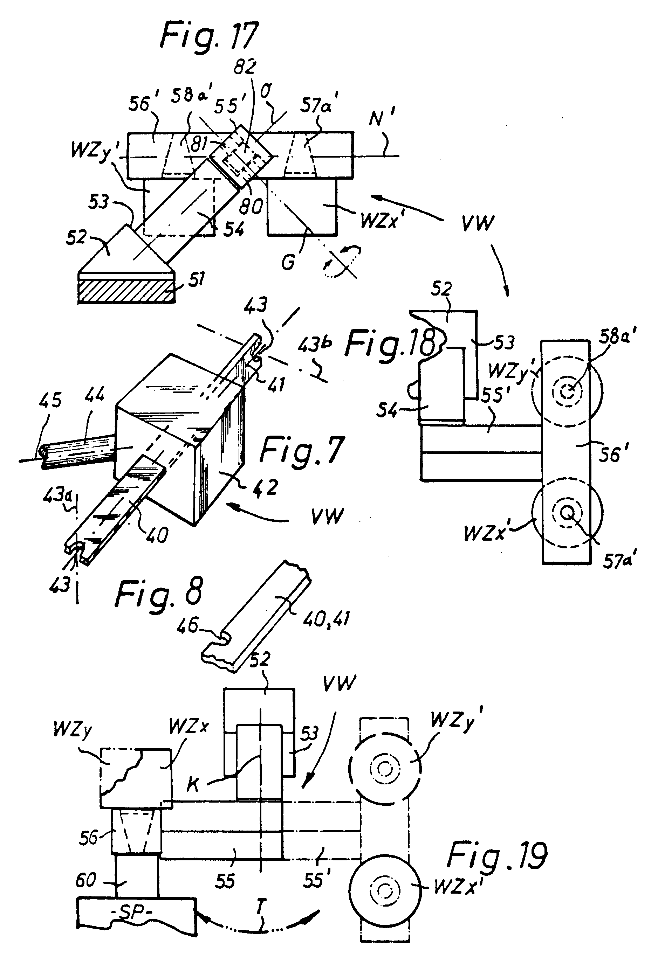

Die in den Fig. 7 bis 19 dargestellten Werkzeugwechselvorrichtungen VW dienen dazu, die an dem Arm 15 hängenden Werkzeuge WZ an den Übergabestationen Ü in die Maschinenmagazine MG und damit in eine horizontale Lage zu bringen, wonach die Werkzeuge wahlweise, wie jedem Fachmann bekannt, aus diesem Magazin z. B. der Spindel der Werkzeugmaschine WM zugeführt werden bzw. diese geschilderte Bewegung in umgekehrter Bewegungsrichtung mit einem gebrauchten Werkzeug erfolgt. - Die dargestellten Ausführungsformen der Wechselvorrichtung VW erlauben es gleichzeitig je ein Werkzeug dem Arm 15 und dem Magazin MG bzw. umgekehrt zu entnehmen und die Werkzeuge nach entsprechender Drehung der Vorrichtung in eine um 90° gedrehte Stellung dem Arm 15 und dem Magazin MG zu übergeben.

Bei der Ausführungsform nach Fig. 7 besitzt die Wechselvorrichtung VW einen Wechselarm mit zwei Armhälften 40, 41, deren einander zugekehrte Enden drehsteif in einem Blöckchen 42 gehalten sind. Die Armhälften sind gleichlang und an ihren freien Enden mit je einer Greiferöffnung 43 versehen. Wesentlich bei dieser Ausführungsform ist, daß die Achsen 43a, 43b der Grieferöffnung 43 in zwei Ebenen liegen, die einen bestimmten Winkel miteinander einschließen, der bei Drehen des Wechselarmes um 180° und einer nachstehend noch zu erläuternden Neigung der Welle 44 von 45° gegen die Vertikale bzw. Horizontale ein rechter Winkel ist. - Die Welle 44, auf der das Blöckchen 42 mit den Armhälften 40, 41 drehfest angeordnet ist, ist um die Achse 45 um 180° drehbar, wobei die Armhälften 40, 41 selbst eine Drehung um 90° um ihre eigene Längsachse Z vollführen, so daß zwei Werkzeuge gleichzeitig ergriffen und in die gewünschten Stellungen gebracht werden können. Die Neigung der Achse 45 der Welle 44 beträgt, wie dargelegt, 45° gegen die Vertikale bzw. Horizontale, während die vertikale Mittelebene durch die Längsachse Z des Blöckchens 12 den gleichen Winkel von 45° mit der Achse 45 einschließt. - In Fig. 8 ist dargestellt, daß das bzw. die Armenden auch seitlich offene Greiferöffnungen 46 aufweisen können.

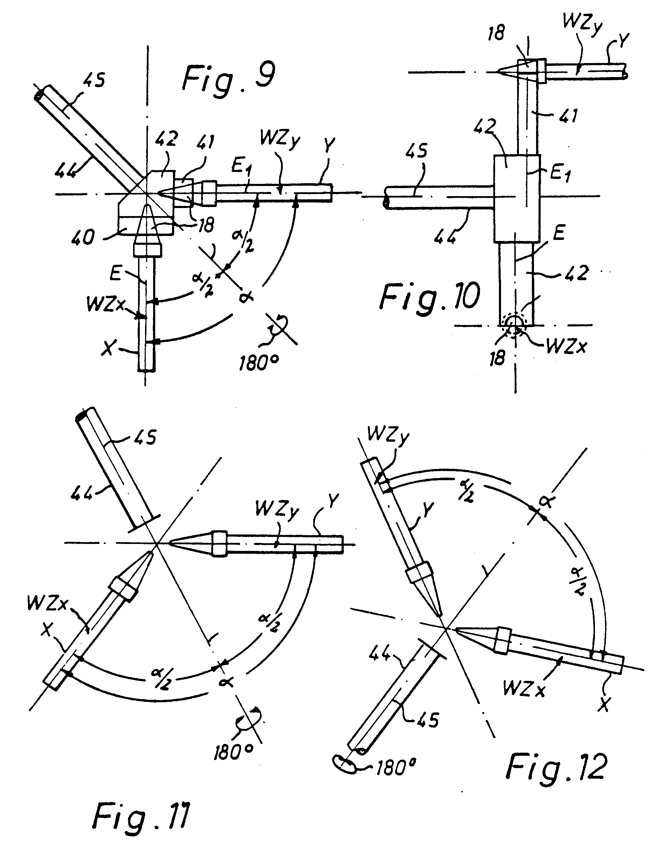

Die Figuren 9 bis 12 lassen erkennen, daß die gegenüber den gegeneinander verschränkten Armhälften 40, 41 geneigte Schwenkachse 45 der Welle 44 auf der Winkelhalbierenden oder besser auf der projektierten Winkelhalbierenden zwischen den Stellungen X, Y der Werkzeuge WZx und WZy gelegen ist, die es zu ergreifen und in Stellungen zu wechseln gilt, die in 90° zueinander angeordneten Ebenen gelegen sind. - In Fig. 9 und 10 ist eine 90°-Lage der Ausgangsstellungen x, y der Werkzeuge WZa, WZb dargestellt. Die Schwenkachse 45 ist auf der (projektierten) Winkelhalbierenden des Winkels α zwischen den beiden Endstellungen der beiden Werkzeuge WZx and WZy mit ihren Konen 18 gelegen und gegenüber den Längsmittelebenen E, E₁ der beiden Arme 40, 41 (vgl. auch Fig. 9) um die Hälfte dieses Winkels α geneigt.

In Fig. 11 und 12 ist dargestellt, daß der Winkel α zwischen den Ausgangsstellung X, Y der Werkzeuge WZa, WZb beliebig, hier 127°, gewählt werden kann. Die Achse 45 liegt wiederum auf der Winkelhalbierenden und die Welle 44 ist gegenüber der Drehebene der Werkzeuge geneigt. Der Vergleich zwischen den Fig. 11 und 12 veranschaulicht, daß die Schwenkwelle 45 jede beliebige Lage im Raum einnehmen kann.

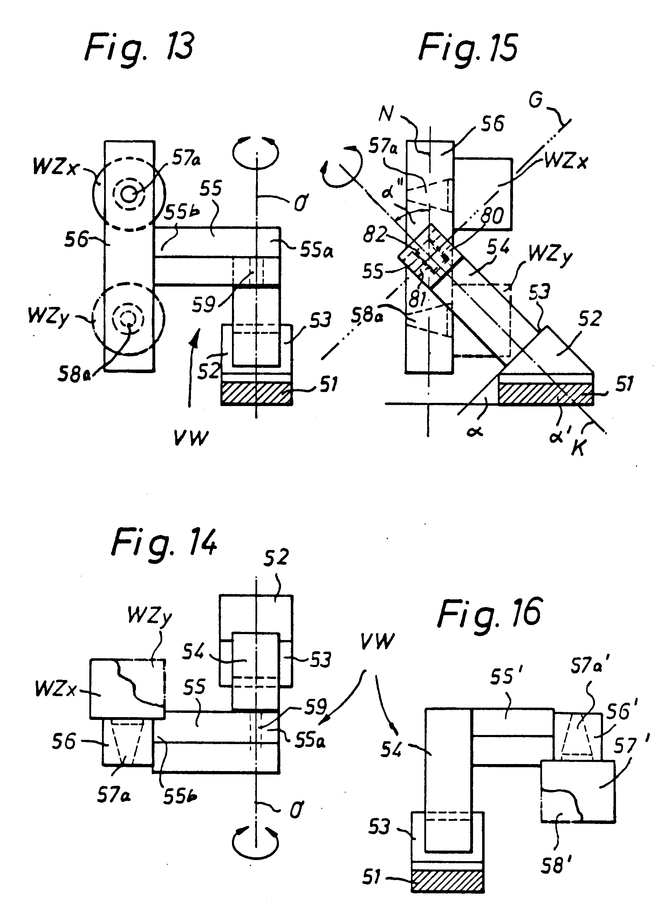

Bei der Ausführungsform der Wechselvorrichtung VW nach den Fig. 13 bis 19, die dann anzuwenden ist, wenn der Platz an der Übergabestation beschränkt ist, ist auf einem Basisteil 51 ein im Querschnitt dreieckförmiges Blöckchen 52 vorgesehen, dessen eine Fläche 53 unter einem Winkel α von 45° gegen die Horizontale geneigt ist. Auf dieser Seite des Blöckchens ist ein Arm 54 fest angeordnet, der mit seiner Längsachse K unter einem Winkel αʹ von ebenfalls 45° gegen die Horizontale geneigt ist. Das obere Ende des Armes 54 weist einen Drehzapfen 59 auf, dessen Längsachse die Schwenkachse O eines Schwenkarmes 55 bildet, wobei dessen Ende 55a mit dem Zapfen 59 um 180° drehbeweglich verbunden ist. Der Schwenkarm 55, der beliebigen, aus Stabilitätsgründen vorzugsweise runden oder quadratischen Querschnitt hat, erstreckt sich, wie die Fig. 13 bis 19 zeigen, seitlich und im rechten Winkel zur Drehachse O, wobei der Arm 55 in seinen beiden Endstellungen parallel zur Horizontalen gelegen ist, wie dies der Vergleich der Figuren 13 bis 16 einerseits und 17 bis 19 andererseits erkennen läßt. Das Ende 55b des Armes 55 trägt einen Wechselarm 56 und ist mit diesem drehfest verbunden, wobei die Längsachse N des Wechselarmes 56 gegenüber der Drehachse O des Armes 56, die mit der Achse Q zusammenfällt, um einen Winkel αʺ von wiederum 45° verschwenkbar ist (Fig. 15).

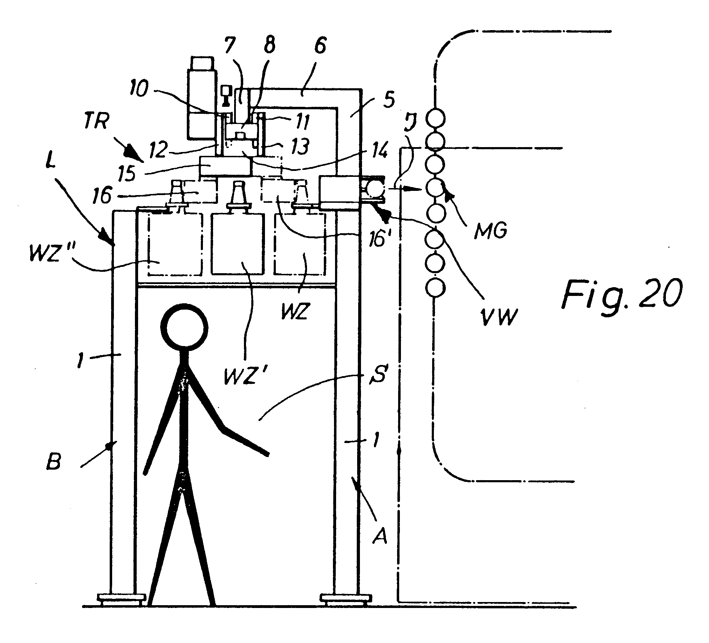

Der Wechselarm 56 liegt somit in seinen Endstellungen in senkrechter oder in horizontaler Ebene (senkrecht in Fig. 13 bis 16, horizontal in Fig. 17 bis 19). Er besitzt Werkzeugaufnahmen 57a, 58a, in denen die Konen von Werkzeugen WZx, WZy Aufnahmen finden, die senkrecht zur Längsachse des Armes 56 an diesem gehalten sind.

Die Werkzeuge werden, wie nachstehend noch beschrieben wird, aus ihrer hängenden Position in dem Arm 15 nach dem Schwenken des Schwenkarmes 55 um die Achse Q um 180° aus den Positionen nach Fig. 17 bis 19 in eine waagerechte Position nach den Fig. 13 bis 16 und umgekehrt bewegt, wobei die waagerechte Position diejenige ist, in welcher die horizontale Spindel 60 eines auf und ab bewegbaren Spindelkastens SP das neue Werkzeug ergreift und das gebrauchte Werkzeug in die entsprechende Aufnahme des Wechselarmes 56 gibt. Hier wird der Spindelkasten mit der Spindel 60 verstellt, so daß diese das alte Werkzeug abgeben und das neue Werkzeug ergreifen kann.

An Hand der Fig. 19 wird eine mögliche Arbeitsweise der zweiten Ausführungsform der Wechselvorrichtung und des Armes 55 und des Wechselarmes 56 erklärt. Der Arm 55 und der Wechselarm 56 befinden sich in der in ausgezogener Linie dargestellten Position. Mit der entsprechenden Werkzeugaufnahme übernimmt der Wechselarm 56 ein gebrauchtes Werkzeug, z. B. das Werkzeug WZx, aus der Spindel 60, die hierbei eine Bewegung in Richtung des Pfeiles T vollführt. Zum Einsetzen eines neuen Werkzeuges WZy in die Spindel verbleiben die Arme 55 und 56 in ihren Stellungen, wobei der Arm 56 senkrecht steht. Der Spindelkasten SP vollführt mit der Spindel 60 eine senkrechte Bewegung, bis die Spindel 60 mit der Achse des neuen Werkzeugs WZy fluchtet, wonach die Spindel dieses Werkzeug dem Arm 56 entnimmt. Nun wird der Wechselarm 56 um den Zapfen 59 um 180° gedreht, so daß die Arme 55 und 56 die Stellungen 55ʹ, 56ʹ und die Werkzeuge die Positionen WZxʹ und WXyʹ einnehmen, die nunmehr an dem Arm 56 senkrecht nach unten hängen (Fig. 14 bis 17).

In dieser Lage der Arme 55 und 56 kann das gebrauchte Werkzeug WZx in ein bewegbares Magazin MG, vorzugsweise ein Kettenmagazin mit waagerechter Werkzeuglagerung abgelegt und gleichzeitig ein neues Werkzeug WZy dem Magazin MG entnommen werden, da die Anordnung der Werkzeuglagerungen in dem Magazin der Anordnung der Werkzeugaufnahmen des Armes 56 entspricht.

Die Schwenkbewegung der Werkzeuge, d. h. des neuen und des gebrauchten Werkzeugs, vollzieht sich raumsparend auf einem Kreisbogen um die Achse Q, der in einer 45° zur Horizontalebene geneigten Ebene liegt. Die Arme 55 und 56 bieten die Möglichkeit, mit einer einzigen Schwenkbewegung ein gebrachtes wie auch ein neues Werkzeug zu erfassen und zu positionieren.

Die Konen der Werkzeuge WZx und WZy ragen, wie üblich, aus dem Arm 56 heraus. Der Einfachheit halber sind die Konen in dem Arm dargestellt. Die Greifervorrichtungen der Spindel 60, des Armes 56 sowie die Werkzeuglagerung in den Werkzeugmagazinen MG sind bekannter Art.

Fig. 20 läßt den Weg eines Werkzeuges in der Stellung WZ in der Regalreihe A bzw. ein Werkzeug in der Stellung WZʺ in die Transportstellung WZʹ sowie die Lage und Funktion der Wechselvorrichtung VW erkennen. Dieses kann, wie dargestellt, falls dies erforderlich ist, auch noch eine horizontale Bewegung (Pfeil I) vollführen, wenn, wie dies Fig. 20 zeigt, das Maschinenmagazin MG nicht unmittelbar im Schwenkbereich der Wechselvorrichtung VW liegt.

Die Regale R sind derart konzipiert, daß die Regalböden 2 von der der Gasse G abgekehrten Außenseite, hier in ihre Stellung an den Säulen 1 und umgekehrt gebracht werden können (Pfeile P in Fig. 3).

Bei der Wechselvorrichtung nach Fig. 13 bis 19 wird durch die Bewegung des Spindelkastens mit der Spindel 60 oder der Kette des Magazins MG bei stehendem Wechselarm 56 das Abnehmen und Aufgeben eines benutzten und eines neuen Werkzeugs bewirkt. - Die Transportvorrichtung TR bringt benutzte Werkzeuge von der Wechselvorrichtung zu den Regalen R und nimmt auf dem Rückweg zu der Wechselvorrichtung ein neues Werkzeug mit.

Bei der bisher beschriebenen Darstellung der Vorrichtung nach den Fig. 13 bis 19 schwenkt der Dreharm 55, an dessen Ende 55b der Wechselarm 56 unter 45° verschränkt fest angebracht ist, um den Zapfen 59, der auf der Längsachse K des Armes 54 angebracht ist. Statt dessen kann der Arm 55 auch um eine rechtwinklig zu der Längsachse K gelegene Achse G (Fig. 15, 17) um 180° geschwenkt werden. Hierzu weist das obere Ende des Armes 54 eine feste Lagergabel 80 (Fig. 15 und 17) auf, in der die Lagerzpafen 81 eines fest mit dem Ende des Armes 55 verbundenen Blöckchens 82 drehbar sind. Bei dieser Ausführung macht der Arm 56 eine 180° Schwenkbewegung (Pfeil T in Fig. 19) und schneidet hierbei die Längsachse K des Armes 54.

## Patentansprüche

1. Flexibles Fertigungssystem für spanabhebende Werkstückbearbeitung, bestehend aus mehreren in einer Reihe aufgestellten Werkzeugmaschinen (WM), aus einer Lagereinrichtung (L) aus mehreren die Werkzeuge (WZ) senkrecht in Ausnehmungen (3) von waagerechten Regalböden (2) aufnehmenden Werkzeugregalen (3) längs einer hinter den Maschinen (WM) angeordneten Führungsbahn (5 bis 16), und aus einer die Werkzeuge (WZ) von der Lagereinrichtung (L) senkrecht transportierenden und den Maschinen zugeordneten Wechselvorrichtungen (VW) an einer Übergabestation (Ü) übergebenden Transporteinrichtung (TR), wobei jede Wechselvorrichtung einen Wechselarm (40, 41; 56) aufweist, der zum Erfassen neuer und gebrauchter Werkezeuge in zwei zueinander rechtwinkeligen Ebenen zwei Werkzeugaufnahmen aufweist und zum Verbringen in diese rechtwinkeligen Ebenen um eine 45° zur Horizontalen geneigte Achse (45; G, K) um 180° schwenkbar ist, **dadurch gekennzeichnet,** daß mehrere Regale (R) in zwei parallelen, zwischen sich eine schmale Gasse (G) bildenden Reihen (A, B) unmittelbar hinter den Werkzeugmaschinen (WM) aufgestellt sind, die Regale (R) von den Außenseiten frei zugänglich sind und von den Außenseiten her einzeln einsetzbare und entnehmbare Regalböden (2) aufweisen, deren Ausnehmungen (3) gegen eine Teil der Führungsbahn bildende Führungsschiene (8) zwischen den Regalböden (A, B) hin offen ist, daß die Transporteinrichtung einen horizontalen Doppelschwenkarm an der Führungsschiene (8) aufweist (15, 16) dessen beide Armteile an ihren einander benachbarten Enden drehbar und knicksteif miteinander verbunden sind und der zum geradlinigen oder annähernd geradlinigen Transport der Werkzeuge aus den Ausnehmungen der Regalböden hängend in die Bewegungsbahn der Werkzeuge in Längsrichtung der Gasse und zurück sowie zur Übergabe bzw. Übernahme der Werkzeuge an einen bwz. von einem Wechselarm (40, 41; 56) der jeweiligen Wechselvorrichtung im Bereich der Regale vorgesehen ist, und daß der Wechselarm entweder mit zwei um 90° verschränkt oder mit zwei in einer Ebene liegenden und parallelachsig angeordneten Werkzeugaufnahmen (43; 57a, 58a) versehen ist.

2. Flexibles Fertigungssystem nach Anspruch 1, **dadurch gekennzeichnet,** daß jedes Regal (R) Ständer (1) aufweist und daß die die Führungsbahn bildende Schiene (8) an einem galgenartigen Abschnitt der Ständer angeordnet ist.

3. Flexibles Fertigungssystem nach Anspruch 2, dadurch gekennzeichnet, daß die Regalböden (2) in einer einen mannshohen Freiraum unterhalb der hängenden Werkzeuge (WZ) belassenden Höhe (H) angeordnet sind.

4. Flexibles Fertigungssystem nach Anspruch 1 und Anspruch 2 oder 3, **dadurch gekennzeichnet,** daß der Abstand (F) zweier parallel zueinander gelegener, auf gleicher Höhe gelegener Regale (R) dem zweifachen Durchmesser der umfangsgrößten Werkzeuge zuzüglich eines geringen Abstandes (ST) entspricht.

5. Flexibles Fertigungssystem nach Anspruch 1 und einem der Ansprüche 2 bis 4, **dadurch gekennzeichnet,** daß die beiden Armteile (15, 16) des Doppelarmes einen Abstand ihrer Drehachsen von ungefähr 2 : 1 haben.

6. Flexibles Fertigungssystem nach Anspruch 5, **dadurch gekennzeichnet,** daß beim Längsverfahren der Transporteinrichtung die beiden Armteile (15, 16) des Doppelarmes deckungsgleich übereinander liegen und in der Greifer- oder Ablagestellung einen stumpfen Winkel zwischen sich bilden.

7. Flexibles Fertigungssystem nach einem oder mehreren der Ansprüche 1 bis 6, **dadurch gekennzeichnet,** daß den Werkzeugmaschinen (WM) Werkzeugmagazine (MG) zugeordnet sind, die die Werkzeuge (WZ) in horizontaler und parallel zu der Führungsschiene (8) gelegener Stellung aufnehmen.

8. Flexibles Fertigungssystem nach einem oder mehreren der Ansprüche 1 bis 7, **dadurch gekennzeichnet,** daß die Wechselvorrichtung (VW) zum gleichzeitigen Wechseln zweier Werkzeuge (WZ) in zwei Endstellungen mit rechtwinklig zueinander gelegenen Längsachsen der Werkzeuge (W) einen mittig gelagerten doppelarmigen Wechselarm (40, 41) aufweist, wobei die Öffnungsachsen (43a, 43b) der Werkzeugaufnahmen (43) um 90° gegeneinander verschränkt sind und die Schwenkachse (45) des Wechselarmes (40, 41) gegenüber der gemeinsamen Ebene (E) der Arme (40, 41) geneigt und auf der Winkelhalbierenden zwischen der vertikalen und der horizontalen Endstellung der Werkzeuge (WZ) gelegen ist.

9. Flexibles Fertigungssystem nach einem oder mehreren der Ansprüche 1 bis 8, **dadurch gekennzeichnet,** daß die Wechselvorrichtung (VW) an dem Maschinenmagazin (MG) verfahrbar ist.

10. Flexibles Fertigungsystem nach einem oder mehreren der Ansprüche 1 bis 9, **dadurch gekennzeichnet,** daß ein Dreharm (55) am Ende eines ortsfesten, um 45° zur Horizontalen geneigten Armes (54) um dessen Längsachse (k) oder um eine zu dieser Längsachse rechtwinklig gelegene und um 45° zur Horizontalen geneigte Achse um 180° schwenkbar ist und der Wechselarm (56) am freien Ende (55b) des Dreharms (55) unter 45° verschränkt fest angebracht ist.

## Claims

1. A flexible production system for machining workpieces by a cutting process, consisting of a plurality of machine tools (WM) set up in a row, a positioning means (L), a plurality of tool racks (3) accommodating the tools (WZ) vertically in recesses (3) in rack members (2) along a guide path (5 to 16) disposed behind the machines (WM) and further comprising transfer means (TR) for transporting the tools vertically from the storage means (L) and, at a transfer station (U), transferring changing devices (VW) which are associated with the machines, each changing device having a changing arm (40, 41; 56) which has two tool housings for gripping new and used tools in two planes which are at right-angles to each other and is pivotable through 180° about an axis (45; G, K) inclined at 45° to the horizontal to bring them into these right-angled planes, characterised in that a plurality of racks (R) are set up in two parallel rows (A, B) which form a narrow alley (G) between them directly behind the machine tools (WM), the racks (R) are freely accessible from the outside and comprise rack members (2) which are individually insertable and removable from outside and in which the recesses (3) are open towards a guide rail (8) between the rack members (A, B) and which forms a part of the guide path and in that the transport means comprise a horizontal double pivoting arm on the guide rail (8), its two arm parts being rotatably and non-kinkingly connected to each other at their mutually adjacent ends, and in that for rectilinear or virtually rectilinear transport of the tools out of the recesses in the rack members, suspended in the path of movement of the tools in the longitudinal direction of the alley and back and for the transfer of the tools to or their recovery from a changing arm (40, 41; 56) of the respective changing device in the area of the racks, and in that the changing arm is provided with two tool housings (43; 57a, 58a) which either intersect at 90° or are disposed in one plane and on parallel axes.

2. A flexible production system according to Claim 1, characterised in that each rack (R) comprises stands (1) and in that the rail (8) forming the guide path is disposed on a gallows-like portion of the stands.

3. A flexible production system according to Claim 2, characterised in that the rack members (2) are disposed at a height (H) which leaves beneath the suspended tools (WZ) a clear space which is the height of a man.

4. A flexible production system according to Claim 1 and 2 or 3, characterised in that the gap (F) between two mutually parallel racks situated at the same height corresponds to twice the diameter of the largest diameter tools plus a small distance (ST).

5. A flexible production system according to Claim 1 and one of Claims 2 to 4, characterised in that the two arm parts (15, 16) of the double arm are spaced apart so that their axes of rotation are at a distance of approximately 2:1.

6. A flexible production system according to Claim 5, characterised in that during longitudinal travel of the transport means the two arm parts (15, 16) of the double arm are coincidentally superposed and in the gripping or setting-down positions are at an obtuse angle to each other.

7. A flexible production system according to one or more of Claims 1 to 6, characterized in that tool magazines (MG) are associated with the machine tools (WM) and accommodate the tools (WZ) in a horizontal attitude and parallel with the guide rail (8).

8. A flexible production system according to one or more of Claims 1 to 7, characterised in that the changing device (VW) has, for simultaneously changing two tools in two extreme positions and with the longitudinal axes of the tools (W) situated at right-angles to each other, a centrally mounted double-armed changing arm (40, 41), the opening axes (43a, 43b) of the tool housings (43) intersecting each other at 90°, the pivot axis (45) of the changing arm (40, 41) being inclined to the common plane (E) of the arms (40, 41) and being situated on the bisector between the vertical and horizontal extreme positions of the tools (WZ).

9. A flexible production system according to one or more of Claims 1 to 8, characterised in that the changing device (VW) is adapted for movement on the machine magazine (MG).

10. A flexible production system according to one or more of Claims 1 to 9, characterised in that a rotary arm (55) at the end of a fixed arm (54) which is inclined at 45° to the horizontal is pivotable through 180° about the longitudinal axis (k) of the arm (54) or about an axis inclined at 45° to the horizontal and situated at a right-angle to said longitudinal axis, the changing arm (56) being rigidly disposed at the free end (55b) of the rotary arm (55) and set at an angle of 45° thereto.

## Revendications

1. Système de fabrication flexible, pour usinage de pièce avec enlèvement de copeaux, composé de plusieurs machines-outils (WM) installées en série, d'un dispositif de stockage (L) composé de plusieurs étagères à outil (3), recevant les outil (WZ) verticalement, dans des évidements (3) de plateaux d'étagère (2) horizontaux, le long d'une piste de guidage (5 à 16) disposée derrière les machines (WM) et composé d'un dispositif de transport (TR), assurant le transport vertical , depuis le dispositif de stockage (L), et effectuant le transfert à des dispositifs changeurs (VM), associés aux machines, pour les amener à un poste de transfert (Ü), chaque dispositif changeur présentant un bras changeur (40;41;56), présentant, en vue de saisir de nouveaux outils et des outils utilisés, deux logements d'outil, disposés dans deux plans perpendiculaires entre eux et susceptibles de pivoter de 180°, pour se déplacer dans ces plans perpendiculaires, autour d'un axe (45;G,K) incliné à 45° par rapport à l'horizontale, caractérisé en ce que plusieurs étagères (R) sont installées en deux rangées (A,B) parallèles, faisant entre elles une voie de passage étroite (G), directement derrière les machinesoutils (WM), les étagères (R) étant librement accessibles par les côtés extérieurs et présentant des plateaux d'étagères (2), pouvant être individuellement insérés et prélevés individuellement par les côtés extérieurs, dont les évidements (3) sont ouverts, entre les plateaux d'étagères (A,B), en direction d'un rail de guidage (8) formant une partie de la piste de guidage, en ce que le dispositif de transport présente (15,16) un bras pivotant double horizontal sur le rail de guidage (8), dont les deux parties sont reliées ensemble à leurs extrémités voisines l'une de l'autre, de façon rotative et rigide au flambage et qui est prévu dans la zone des étagères, pour assurer le transport suspendu des outils, en ligne droite ou à peu près en ligne droite, hors des évidements des plateaux d'étagères, sur le trajet de déplacement des outils, dans la direction longitudinale de la voie de passage et retour, ainsi que pour assurer le transfert, ou la réception des outil s à un, ou depuis un bras changeur (40,41;56) de chaque dispositif changeur, et en ce que le bras changeur est pourvu de deux logements d'outil (43;57a,58a), soit décalés de 90° soit disposés dans un plan et parallèlement.

2. Système de fabrication flexible selon la revendication 1, caractérisé en ce que chaque étagère (R) présente des poteaux (1) et en ce que le rail (8) formant la piste de guidage est disposée sur un tronçon en forme de potence des poteaux.

3. Système de fabrication flexible selon la revendication 2, caractérisé en ce que les plateaux d'étagère (2) sont disposés dans à un niveau (H) laissant un espace libre de hauteur d'homme, au-dessous des outils (WZ) suspendus.

4. Système de fabrication flexible selon les revendications 1 et 2, caractérisé en ce que la distance (F) de deux étagères (R), placées parallèlement et au même niveau correspond au double du diamètre de l'outil à la plus grande circonférence, en ajoutant en plus une faible distance (ST).

5. Système de fabrication flexible selon la revendication 1 et l'une des revendications 2 à 4, caractérisé en ce que les deux parties de bras (15,16) du bras double présentent entre les axes de rotation une distance d'à peu près 2:1.

6. Système de fabrication flexible selon la revendication 5, caractérisé en ce que lors du déplacement longitudinal du dispositif de transport, les deux parties de bras (15,16) du bras double viennent en coïncidence et forment entre elles un angle obtus, dans la position de préhension ou de dépose.

7. Système de fabrication flexible selon l'une ou plusieurs des revendications 1 à 6, caractérisé en ce que des magasins à outils (MG), recevant les outils (WZ) dans une position horizontale et parallèle au rail de guidage (8) sont associés aux machines-outils (WM).

8. Système de fabrication flexible selon l'une ou plusieurs des revendications 1 à 7, caractérisé en ce que le dispositif changeur (WM) présente un bras changeur (40,41) double, monté au centre, pour opérer un changement simultané de deux outils (WZ) dans deux positions finales, les outils (W) ayant leurs axes longitudinaux perpendiculaires, les axes d'ouverture (43a,43b) des logements d'outils (43) étant décalés de 90° entre eux et l'axe de pivotement (45) du bras changeur (40,41) étant incliné par rapport au plan commun (E) des bras (40,41) et placé sur la bissectrice, entre les positions finales verticale et horizontale des outils (WZ).

9. Système de fabrication flexible selon l'une ou plusieurs des revendications 1 à 8, caractérisé en ce que le dispositif changeur (VM) est déplaçable sur le magasin de machine (MG).

10. Système de fabrication flexible selon l'une ou plusieurs des revendications 1 à 9, caractérisé en ce qu'un bras pivotant (55) est monté à l'extrémité d'un bras fixe (54), incliné de 45° par rapport à l'horizontal, pivotant de 180° autour de son axe longitudinal (k) ou autour d'un axe perpendiculaire par rapport à cet axe longitudinal et incliné de 45° par rapport à l'horizontale et le bras changeur (56) étant monté rigidement à l'extrémité libre (55b) du bras tournant (55), décalé de 45°.
